# EUROPEAN PATENT APPLICATION

(11) **EP 1 541 232 A1**
(43) Date of publication of application: **15.06.2005**
(21) Application number: 03741437.2
(22) Date of filing: 17.07.2003
(51) Int. Cl.: B01J 35/02, D06M 11/44, D06M 11/46, D06M 15/17

(54) **PHOTOCATALYST-CONTAINING BASE MATERIAL**

(30) Priority: 19.07.2002 JP 2002211065
(71) Applicant: Fushimi Company Limited, Sanda-shi, Hyogo 669-1344 (JP); Cygnus Entertainment, Inc., Osaka-shi, Osaka 541-0048 (US)
(72) Inventor: MURASAWA, Kiyoko, DECEASED (JP); KURODA, Masamichi, Sanda-shi, Hyogo 669-1506 (JP); KURODA, Fumio, Takarazuka-shi, Hyogo 665-0007 (JP)
(74) Representative: HOFFMANN EITLE
(86) International application number: PCT/JP2003/009061
(87) International publication number: WO 2004/009235

(57) **Abstract**

A photocatalyst-containing substrate having an organic substrate and fine photocatalyst particles, wherein the fine photocatalyst particles are deposited on the surface of the organic substrate with a resin binder containing a shellac resin. The photocatalyst-containing substrate can be suitably used for clothes, interior fibrous articles such as curtains, floor mattresses, interior materials for automobiles and the like.

## Description

### TECHNICAL FIELD

The present invention relates to a photocatalyst-containing substrate. More specifically, the present invention relates to a photocatalyst-containing substrate which can be suitably used for clothes, interior fibrous articles such as curtains, floor mattresses, interior materials for automobiles, and the like.

### BACKGROUND ART

Photocatalysts have deodorizing property, antibacterial property, stain-proof property and the like. Therefore, the photocatalysts have been used in various fields in recent years. When a photocatalyst is deposited on a substrate to use, the photocatalyst is not used as it is, and used as a mixture prepared by mixing ultrafine silica particles obtained by hydrolysis of an alkylsilane as a binding agent with a photocatalyst (Japanese Patent Laid-Open No. Hei 7-171408), or as a mixture prepared by mixing titanium peroxide as a binding agent with a photocatalyst (Japanese Patent Gazette No. 2875993), and the like.

However, since the binding agents which have been used in these mixtures are inorganic binding agents, there is a defect such that the binding agent cannot be firmly bonded to the surface of the organic substrate.

Therefore, as a means for eliminating the defect, there has been proposed to previously undercoat a substrate before applying the mixture to an organic substrate.

However, when the undercoating is carried out as described above, not only an undercoating agent is inevitably necessitated, but also troublesome processing operations are required therefor.

In addition, even if the adhesion between the above-mentioned mixture and the organic substrate is enhanced by undercoating, toughness of the film of the above-mentioned mixture formed on the surface of the organic substrate is not sufficient since the inorganic binding agent is contained in the mixture. Therefore, when the above-mentioned mixture is used for an organic substrate having flexibility, the above-mentioned film may be sometimes detached from the organic substrate due to the flexibility of the organic substrate. For instance, when the mixture is deposited on a cloth, the mixture is detached away from the cloth upon washing, so that a desired effect such as deodorizing property cannot be sustained.

Therefore, as a substitute for conventional inorganic binding agents, there has been proposed a binding agent comprising a thermosetting resin such as a melamine resin, an epoxy resin or a fluororesin (Japanese Patent Gazette No. 3022192), or a binding agent comprising an acrylic resin emulsion.

However, when the binding agent is applied to a substrate having flexibility, for instance, a cloth or the like, since a rigid film is formed on the substrate surface, there are some defects such that feel of the substrate is lost, and consequently the worth of the manufactured article obtained is lowered.

### DISCLOSURE OF INVENTION

The present invention has been accomplished in view of the prior art mentioned above, and an object of the present invention is to provide a photocatalyst-containing substrate capable of maintaining feel and flexibility of the organic substrate, being excellent in adhesion between the organic substrate and the photocatalyst, and retaining the properties of the photocatalyst for a long period of time.

The present invention relates to a photocatalyst-containing substrate comprising an organic substrate and fine photocatalyst particles, wherein the fine photocatalyst particles are deposited on the surface of the organic substrate with a resin binder comprising a shellac resin.

### BEST MODE FOR CARRYING OUT THE INVENTION

One of the great features of the photocatalyst-containing substrate of the present invention resides in that a shellac resin is used as a resin binder.

When the shellac resin is used as a resin binder for the photocatalyst-containing substrate as mentioned above, there are surprisingly exhibited excellent properties such that not only feel and flexibility of the organic substrate are hardly lost, but also adhesion between the organic substrate and the photocatalyst is excellent, and properties such as deodorizing properties ascribed to the photocatalyst can be kept for a long period of time.

Furthermore, when a binding agent such as a conventional thermosetting resin or an acrylic resin is used, the photocatalytic reaction ascribed to the photocatalyst progresses on the surface of the film made of the binding agent, and the binding agent itself deteriorates due to oxidation denaturalization. Therefore, a so-called choking phenomenon, that is, deterioration of a film may be generated in accordance with the passage of time. On the contrary, according to the present invention, since the shellac resin is used in the photocatalyst-containing substrate as a binder resin, there are exhibited excellent effects such that the deterioration of the film can be also suppressed.

As described above, since the photocatalyst-containing substrate of the present invention eliminates all of the problems of the prior art, the photocatalyst-containing substrate is expected to be used in various applications over a wide range.

The shellac resin usable in the present invention is a natural resin prepared by purifying a resin excreted by *Lucifer lacca* Kerr. (stick lac). The shellac resin is thought to be a natural condensate prepared by bonding a hydroxycarboxylic acid mainly composed of aleuritic acid, shellolic acid or the like to lactone. However, its ingredients have not been completely elucidated.

The shellac resin which can be suitably used in the present invention includes, for instance, purified shellac as prescribed in JIS K 5909, and bleached shellac as prescribed in JIS K 5911.

The shellac resin itself is solid as it is. Therefore, the shellac resin can be used, for instance, in the form of a solution prepared by dissolving the shellac resin in an organic solvent such as a lower alcohol such as ethanol, or an aqueous emulsion.

Representative examples of the photocatalyst include titanium dioxide, zinc oxide, a composite oxide of titanium dioxide and zinc oxide, and the like. These photocatalysts can be used alone or in admixture of at least two kinds. Among these photocatalysts, titanium dioxide can be suitably used because of its high catalytic activity.

It is desired that the photocatalyst comprises fine photocatalyst particles having a primary particle diameter of at most 250 nm, preferably at most 50 nm, from the viewpoint of enhancing catalytic activity as well as homogeneously dispersing the photocatalyst in the shellac resin.

The photocatalyst can be used in the form of powder, or can be also used as an aqueous sol. The aqueous sol of titanium dioxide is commercially available from ISHIHARA SANGYO KAISHA, LTD. under the trade name of STS-01 and the like.

The amount of the photocatalyst cannot be absolutely determined because the amount differs depending upon the kinds of the organic substrate or their applications. It is desired that the amount of the photocatalyst is usually 10 to 500 parts by weight, preferably 50 to 400 parts by weight based on 100 parts by weight of the shellac resin from the viewpoint of exhibiting sufficient catalytic activity and keeping flexibility and feel of the organic substrate.

Before the photocatalyst is deposited on the surface of the organic substrate, the photocatalyst is mixed with the shellac resin. In this case, in order to easily deposit the photocatalyst and the shellac resin on the organic substrate, it is preferable to use a mixed solution prepared by mixing the aqueous sol of the photocatalyst and the shellac resin emulsion. When this mixed solution is prepared, the mixed solution can be deposited on the organic substrate by, for instance, dipping method, roller-coating method, spray coating method or the like.

The amount of the photocatalyst deposited on the organic substrate cannot be absolutely determined because the amount differs depending upon the kinds of the organic substrates and the applications. It is desired that the amount of the photocatalyst deposited is usually 1 to 20 g/m², preferably 3 to 15 g/m² from the viewpoint of exhibiting sufficient catalytic activity and keeping the flexibility and feel of the organic substrate.

After the deposition of the above-mentioned mixed solution on the organic substrate, the organic substrate is dried, whereby the photocatalyst and the shellac resin can be fixed to the organic substrate.

The organic substrate includes, for instance, organic fibrous substrates, resin plates, resin sheets, platy rubbers and the like. However, the present invention is not limited to those exemplified ones. Among them, the organic fibrous substrate is preferable from the viewpoint of adhesion of the photocatalyst and the shellac resin to the substrate.

The organic fibrous substrate includes, woven fabrics such as cloths made of organic fibers, nonwoven fabric, felt, knit and the like. However, the present invention is not limited to those exemplified ones. The fibers constituting the organic fibrous substrate includes, for instance, natural fibers such as cotton, silk, flax and wool; regenerated fibers such as rayon; semi-synthesized fibers such as acetate; synthetic fibers such as polyester fiber, acrylic fiber, nylon and polypropylene fiber; and the like. Among these fibers, the natural fibers such as cotton and silk, the polyester fiber, nylon and the like are preferable from the viewpoint of adhesion of the photocatalyst and the shellac resin to the fiber.

The photocatalyst-containing substrate of the present invention thus obtained is firmly deposited on the organic substance without losing flexibility and feel of the organic substrate, since the shellac resin is used as a resin binder. In addition, the photocatalyst-containing substrate of the present invention shows a strong oxidizing power when irradiated with light, but the shellac resin is hardly denaturalized by the oxidizing power. Therefore, the photocatalyst-containing substrate maintains excellent catalytic activity for a long period of time.

Accordingly, the photocatalyst-containing substrate of the present invention is expected to be used in a wide variety of fields such as clothes, interior fibrous articles, interior materials for automobiles which easily retain cigarette odor, and the like, as well as bedclothes such as bed linens, curtains, room partitions, pillow cases, pajamas and Japanese bathrobes, white hospital frocks and floor mattresses used in hospital wards for the purposes of reducing noscomial infection in hospitals.

Next, the present invention will be described more specifically on the basis of Examples, without intending to limit the present invention only to those

### Examples.

### Example 1

Titanium dioxide aqueous sol [manufactured by ISHIHARA SANGYO KAISHA, LTD. under the trade name of STS-01, diameter of primary particles of titanium dioxide: 7 nm] as a photocatalyst was mixed with a shellac resin aqueous emulsion [manufactured by THE JAPAN SHELLAC INDUSTRIES, LTD. under the trade name of SB-25] as a resin binder so that the titanium dioxide content (solid content) was 2.0% by weight and the shellac resin content (solid content of resin) was 0.5% by weight, to give a mixed solution.

Five-hundred milliliters of the mixed solution obtained was mixed by means of a homogenizer [manufactured by IKA under the trade name of ULTRA-TURRAX T-25] at 11000 rpm for 10 minutes.

On the other hand, a cloth (area weight: 650 g/m²) made of 100% polyester fibers was cut into a size of 10 cm × 10 cm, the substrate obtained was dried in a box-type electric dryer at 100°C for 1 hour, and its weight was measured. As a result, the weight of the substrate was 6.48 g.

Next, this substrate was dipped in the mixed solution obtained above, and allowed to stand for 5 minutes. Thereafter, the substrate was taken out from the mixed solution, and strongly squeezed so that the weight of the mixed solution contained in the substrate was equal to the weight of the substrate, to give a photocatalyst-containing substrate. Subsequently, this photocatalyst-containing substrate was dried in a box-type electric dryer at 100°C for 1 hour, and its weight was measured. As a result, the weight of the photocatalyst-containing substrate was 6.65 g.

The amount of the photocatalyst deposited on the obtained photocatalyst-containing substrate was 13.6 g/m², and the amount of the shellac resin was 3.4 g/m².

Next, as the physical properties of the obtained photocatalyst-containing substrate, deodorizing property, washing fastness, feel and adhesion to a substrate were evaluated on the bases of the following methods. The results are shown in Table 1.

### [Deodorizing Property]

A 4.5 L-transparent vessel made of an acrylic resin was charged with a photocatalyst-containing substrate, and inside of the vessel was sufficiently replaced with air containing 100 ppm ammonia gas, and a transparent plate made of an acrylic resin was placed on the opening of the vessel to seal the vessel in a tightly sealed state.

Next, the photocatalyst-containing substrate in the vessel was irradiated with ultraviolet rays, using an ultraviolet ray lamp [manufactured by TOSHIBA CORPORATION, Chemical Lamp FL-10BL] so that the photocatalyst-containing substrate was irradiated at an ultraviolet ray intensity of 385 µW/cm². The concentrations of ammonia gas in the vessel were determined with a detection pipe [manufactured by GASTEC CORPORATION, No. 3La] after 30 minutes, 1 hour and 2 hours passed from the ultraviolet ray irradiation.

### [Washing Fastness]

The photocatalyst-containing substrate obtained was placed in a vessel containing 10 L of water, and hand-washing was carried out in the vessel for 1 minutes. Thereafter, the photocatalyst-containing substrate after washing was dried in a box-type electric dryer at 100°C for 1 hour. Thereafter, the photocatalyst-containing substrate was irradiated with ultraviolet rays in the same manner as in "Deodorizing Property" mentioned above. The concentration of ammonia gas in the vessel was determined with a detection pipe [manufactured by GASTEC CORPORATION, No. 3La] after 30 minutes, 1 hour and 2 hours passed from the ultraviolet ray irradiation.

### [Feel]

The difference in feel between the photocatalyst-containing substrate obtained and the cloth before the production of the substrate was evaluated by hand-feel. The case where the difference was judged to be little was evaluated as "acceptable," and the other case was evaluated as "unacceptable."

### Comparative Example 1

Titanium dioxide aqueous sol [manufactured by ISHIHARA SANGYO KAISHA, LTD. under the trade name of STS-01, diameter of primary particles of titanium dioxide: 7 nm] as a photocatalyst was mixed with an acrylic resin aqueous emulsion [manufactured by DAINIPPON INK AND CHEMICALS, INCORPORATED under the trade name of VONCOAT R-3310] as a binding agent so that the titanium dioxide content (solid content) was 2.0% by weight and the shellac resin content (solid content of resin) was 0.5% by weight, to give a mixed solution.

Five-hundred milliliters of the mixed solution obtained was mixed by means of a homogenizer [manufactured by IKA under the trade name of ULTRA-TURRAX T-25] at 11000 rpm for 10 minutes.

On the other hand, a cloth (area weight: 650 g/m²) made of 100% polyester fibers was cut into a size of 10 cm × 10 cm, the substrate obtained was dried in a box-type electric dryer at 100°C for 1 hour, and its weight was measured. As a result, the weight of the substrate was 6.36 g.

Next, this substrate was dipped in the mixed solution obtained, and allowed to stand for 5 minutes. Thereafter, the substrate was taken out from the mixed solution, and strongly squeezed so that the weight of the mixed solution contained in the substrate was equal to the weight of the substrate, to give a photocatalyst-containing substrate. Subsequently, this photocatalyst-containing substrate was dried in a box-type electric dryer at 100°C for 1 hour, and its weight was measured. As a result, the weight of the photocatalyst-containing substrate was 6.49 g.

The amount of the photocatalyst deposited on the obtained photocatalyst-containing substrate was 10.4 g/m², and the amount of the acrylic resin (solid content of resin) was 2.6 g/m².

Next, as the physical properties of the photocatalyst-containing substrate obtained, deodorizing property, washing fastness and adhesion with a substrate were evaluated in the same manner as in Example 1. The results are shown in Table 1.

**Table 1**

| Ex. No. | Physical Properties of Photocatalyst-Containing Substrate | | | | | | |
|---|---|---|---|---|---|---|---|
| | Deodorizing Property (ppm) | | | Washing Fastness (ppm) | | | Feel |
| | After 30 Minutes | After 1 Hour | After 2 Hours | After 30 Minutes | After 1 Hour | After 2 Hours | |
| 1 | 7 | < 5 | < 5 | 30 | 15 | 13 | Acceptable |
| Comp. Ex. 1 | 10 | < 5 | < 5 | 80 | 60 | 50 | Unacceptable |

It can be seen from the results shown in Table 1 that the photocatalyst-containing substrate obtained in Example 1 is excellent in feel and deodorizing property as well as the deodorizing property is retained even when the photocatalyst-containing substrate is washed, which shows that the photocatalyst is firmly deposited on the photocatalyst-containing substrate.

On the other hand, according to Comparative Example 1 being an example in which a conventional binding agent is used, it can be seen that the photocatalyst-containing substrate is wrong in feel, and the deodorizing property is drastically lowered when washing, although the photocatalyst-containing substrate obtained is good in deodorizing property at the initial stage.

### Example 2

An ethanol solution of a shellac resin, the solid content of which was 3.5% by weight was mixed with a titanium dioxide aqueous sol [manufactured by ISHIHARA SANGYO KAISHA, LTD. under the trade name of STS-01, diameter of primary particles of titanium dioxide: 7 nm] so that the titanium dioxide content was 2% by weight and the shellac resin content was 0.5% by weight, to give a mixed solution.

The mixed solution obtained was coated on a polyester plate so that the coated amount after drying was 15 g/m², and the formed film was sufficiently dried. Thereafter, the film was cut with a cutter-knife so that checkers having a size of 1 mm × 1 mm were formed 10 in each of length and width directions, that is, 100 checkers were formed in total. A cellophane adhesive tape [manufactured by NICHIBAN CO., LTD. under the trade name of Cellotape (registered trademark)] was attached to the film, and subjected to a checker test as prescribed in JIS G 0202. As a result, the number of checkers detached from the resin plate was 0.

It can be seen from this fact that the adhesion between the organic substrate and the film formed on the surface of the photocatalyst-containing substrate obtained is excellent.

### INDUSTRIAL APPLICABILITY

The photocatalyst-containing substrate of the present invention has suitable flexibility on the basis of its organic substrate, and is excellent in adhesion of the photocatalyst and capable of retaining properties such as deodorizing properties of the photocatalyst for a long period of time. Therefore, the photocatalyst-containing substrate can be suitably used for clothes, interior fibrous articles such as curtains, floor mattresses, interior materials for automobiles, and the like.

## Claims

1. A photocatalyst-containing substrate comprising an organic substrate and fine photocatalyst particles, wherein the fine photocatalyst particles are deposited on the surface of the organic substrate with a resin binder comprising a shellac resin.

2. The photocatalyst-containing substrate according to claim 1, wherein the photocatalyst comprises particles having a primary particle diameter of at most 250 nm.

3. The photocatalyst-containing substrate according to claim 1 or 2, wherein the photocatalyst is at least one metal oxide selected from the group consisting of titanium dioxide, zinc oxide and a composite oxide of titanium oxide and zinc oxide.

4. The photocatalyst-containing substrate according to any one of claims 1 to 3, wherein the organic substrate is an organic fibrous substrate.
